Europäisches Patentamt

European Patent Office

Office européen des brevets

(19)

(11) Veröffentlichungsnummer: **0 021 454**
**B1**

(12)

# EUROPÄISCHE PATENTSCHRIFT

(45) Veröffentlichungstag der Patentschrift:
18.05.83

(51) Int. Cl.³: **F 16 L 21/02**

(21) Anmeldenummer: **80104429.8**

(22) Anmeldetag: **28.07.78**

(60) Veröffentlichungsnummer der früheren Anmeldung
nach Art. 76 EPÜ:

(54) **Spannring zur Befestigung eines elastischen Dichtungsringes in einer Rohrmuffe.**

(30) Priorität: 26.09.77 DE 2743238
09.12.77 DE 2754982

(43) Veröffentlichungstag der Anmeldung:
**07.01.81 Patentblatt 81/1**

(45) Bekanntmachung des Hinweises auf die Patenterteilung:
**18.05.83 Patentblatt 83/20**

(84) Benannte Vertragsstaaten:
**BE DE FR GB NL**

(56) Entgegenhaltungen:
**DE-A-2 518 001**
**DE-B-1 182 913**
**FR-A-2 293 858**

(73) Patentinhaber: **WOCO Franz-Josef Wolf & Co.,**
**Sprudelallee 19, D-6483 Bad Soden-Salmünster (DE)**

(72) Erfinder: **Wolf, Franz Josef, Sprudelallee 19, D-6483 Bad**
**Soden-Salmünster (DE)**
Erfinder: **Roth, Dieter, Zum wilden Stein 2,**
**D-6490 Schlüchtern-Kressenbach (DE)**

(74) Vertreter: **Jaeger, Klaus, Dr.rer.nat. Dipl.-Chem. et al,**
**Jaeger, Grams & Pontani Patentanwälte**
**Bergstrasse 48 1/2, D-8035 München-Gauting (DE)**

**Spannring zur Befestigung eines elastischen Dichtungsringes in einer Rohrmuffe**

*Querverweis*

Das vorliegende Patent beruht auf einer Teilanmeldung der ursprünglichen Anmeldung Nr. 78100546.7, jetzt Europäisches Patent Nr. 1385.

*Beschreibung*

Die Erfindung betrifft einen Spannring zur Befestigung eines elastischen Dichtungsringes in einer Rohrmuffe.

Im Zusammenhang mit Rohrsteckverbindungen zwischen einem äusseren Rohrelement, das im folgenden als Muffe bezeichnet ist, und einem in diese Muffe eingesteckten inneren Rohrelement, das im folgenden als Spitzende bezeichnet ist, ist es üblich, einen elastischen Dichtungsring, der im Dichtspalt zwischen der Innenwand der Muffe und der Aussenwand des Spitzendes angeordnet ist, vor dem Einschieben des Spitzendes in der Muffe vorzumontieren. Dabei ist es erforderlich, den vormontierten Dichtungsring in der Muffe ausreichend fest zu verankern. Zu diesem Zweck ist bekannt, am Dichtungsring meist als Ringelemente ausgebildete Halteorgane anzuformen, die durch einen Spannring oder Klemmring in eine Nut, eine Ausnehmung oder einen Falz der Muffe gezwungen werden (DE-B1 Nr. 1250215; DE-A1 Nr. 2518001).

Bei dem aus der zuerst genannten Druckschrift DE-B1 1250215 bekannten Klemmring handelt es sich um einen geschlossenen Klemmring von der Form eines Zylinderringes mit zumindest im wesentlichen rechteckigem axialem Wandquerschnitt. Ein solcher Klemmring ist nur für Rohre verwendbar, die nach dem Einsetzen des Dichtungsringes und des Klemmringes noch verformbar sind, insbesondere also für duktile Metallrohre. Dieser Klemmring ist jedoch nicht für Rohre aus solchen Werkstoffen verwendbar, die nach dem Einsetzen des Dichtungsringes und des Klemmringes nicht mehr verformbar sind, beispielsweise also für Rohre aus mineralischen Werkstoffen wie etwa gebranntem Ton, Beton oder Asbestzement.

Aus der Druckschrift DE-A1 Nr. 2518001 sind offene Federklemmringe zur Befestigung eines Dichtungsringes in einer Muffe bekannt, die als Drahtfederringe ausgebildet sind und hebelartige Griffelemente aufweisen, die über den Muffenkragen vorstehen. Durch Zusammendrücken dieser Griffelemente kann der Radius des Federklemmringes verkleinert werden, so dass der Ring in den Dichtungsring eingesetzt werden kann. Nach Aufheben der auf die Griffelemente einwirkenden Kraft entspannt sich der Federring unter Radiusvergrösserung und zwingt dadurch die Dichtung in eine Nut in der Muffe. Die von solchen Federdrahtringen aufbringbaren Spannkräfte reichen nicht aus, um Dichtungen mit grösseren Durchmessern und grösseren Wandstärken in der Muffe sicher zu verankern. Ausserdem ist durch die überstehenden Griffelemente die Gefahr der unbeabsichtigten Entfernung oder Verkantung des Spannringes aus der Muffe gegeben. Schliesslich unterliegen metallische Federringe bei Erdverlegung der Rohre in starkem Masse der Korrosion.

Schliesslich ist aus der Druckschrift FR-U Nr. 2293858 ein Spannring aus einem federelastischen Werkstoff bekannt, der dem Einspannen von Bespannungen in einem Rahmen dient. Der Spannring ist offen und so ausgebildet, dass sich seine beiden offenen Enden überlappen können. Dabei ist das eine der beiden offenen Enden als Zunge ausgebildet, während das andere als radial auswärts offenes U-Profil ausgestaltet ist. Auf der nach radial innen weisenden Unterseite der Zunge und auf der radial nach aussen weisenden Sohle des U-Profils sind zueinander komplementäre Sägezahnprofile ausgeformt. Die Sägezahnprofileinschnitte haben im wesentlichen die Form gleichseitiger Dreiecke. An der Zunge ist eine axialstehende Feder angeformt, die in eine profilkomplementäre axial zurückspringende Nut in einem der Schenkel des U-Profils eingreifen kann. Zumindest dieser Schenkel des Profils ist federelastisch ausgebildet, so dass die Zunge mit der axialstehenden Feder von oben her einklippsend oder einrastend in die Nut eingedrückt werden kann. Nut und Feder sind dabei in radialer Richtung gesehen so weit von den Sägezahnprofilen entfernt, dass beim Einlegen der Zunge in das U-Profil und beim Einrasten der Feder in die Nut die beiden Zahnprofile gegeneinander verriegelt sind. Wenn die Zunge in das U-Profil eingelegt und die Feder in die Nut eingerastet ist, ist der Spannring also sowohl gegen eine Durchmesservergrösserung als auch gegen eine Durchmesserverkleinerung verriegelt.

Zur Handhabung dieses bekannten Spannringes wird in der Weise vorgegangen, dass das in den offenen Rahmen zu spannende Material vom Ring in eine Rahmennut gezwängt wird, wobei der Spannring im Sinne einer Radiusvergrösserung aufgeweitet wird. Dabei liegt die Zunge in der Rahmennut, während das U-Profil spiralig über die Zunge läuft. Wenn die gewünschte Spannung erreicht ist oder sich der Radius des Ringes durch Auseinanderzwingen der beiden Ringenden nicht mehr erweitern lässt, wird das nach radial aussen offene U-Profil nach radial auswärts gegen und auf die Zunge gezwungen. Beim Einrasten der Feder in die Nut ist der Ring gegen eine Radiusverkleinerung verriegelt und hält so das Bespannungsmaterial in der Rahmennut fest. Wenn aus irgendwelchen Gründen die Spannung des Spannringes vergrössert werden soll, also der Durchmesser des Spannringes vergrössert werden soll, muss zunächst das U-Profil radial einwärts von der in ihm liegenden Zunge abgehoben werden, so dass die axial vorstehende Feder aus der Nut im U-Profil ausgeklippst wird. Nach diesem Öffnen des Ringes muss dieser erneut gespannt werden und dann beim Erreichen der gewünschten Spannung wieder über die Zunge gedrückt werden, wobei wiederum die Feder in die Nut einrastet und dadurch die beiden Sägezahnprofile zum gegeneinander verriegelnden Eingriff gebracht werden.

Nachteilig bei diesem Spannring ist, dass er beim radial aufweitenden Spannen zwischen Zunge und U-Profil fast ungeführt ist und dadurch in axialer Richtung instabil ist. Mit einem solchen Ring können nur geringe, radial auswärtsgerichtete Spannungen erzeugt werden. Die mit diesem Ring erzielbaren Spannungen liegen weit unterhalb der zum Einspannen üblicher Gummidichtungsringe in Rohrmuffen, beispielsweise Kanalrohrmuffen, erforderlichen Spannkräfte. Ausserdem ist der Verriegelungsmechanismus des bekannten Spannringes, der ein Nachspannen des Ringes nur bei vollständigem Lösen ermöglicht, zum Einspannen von Dichtungen in Rohrmuffen völlig ungeeignet.

Angesichts dieses Standes der Technik liegt der Erfindung die Aufgabe zugrunde, einen Spannring zur Befestigung eines elastischen Dichtungsringes in einer Rohrmuffe zu schaffen, der universell einsetzbar ist, und zwar auch für Dichtungen mit grösseren Durchmessern, mit dem also hohe Spannungen aufgebracht werden können, der leicht und problemlos nachspannbar ist und sowohl beim Einsetzen und Spannen als auch in der Handhabung nach dem Spannen unempfindlich gegen robuste äussere Einwirkungen ist.

Zur Lösung dieser Aufgabe wird ein Spannring der im Oberbegriff des Patentanspruchs 1 genannten gattungsgemässen Art geschaffen, der erfindungsgemäss die im kennzeichnenden Teil des Patentanspruchs 1 genannten Merkmale aufweist.

Im Gegensatz zu dem aus der Druckschrift FR-U Nr. 2293858 bekannten Spannring ist also der Spannring der Erfindung auch dann aufweitbar, wenn die Zunge in dem nach radial einwärts offenen U-Profil liegt. Der Spannring der Erfindung ist also bei eingelegter Zunge nicht sowohl gegen eine Radiusvergrösserung als auch gegen eine Radiusverkleinerung, sondern ausschliesslich gegen eine Radiusverkleinerung verriegelt, während er beliebig aufweitbar ist. Dieses Sperrverhalten wird als selbstverriegelnd gegenüber einer Radiusverkleinerung bezeichnet. Durch die am Ring weiterhin vorgesehenen Anschläge für ein Spreizwerkzeug lässt sich der Spannring der Erfindung bis zu sehr hohen Spannungen aufweiten, wobei durch die ständige Führung der Zunge im U-Profil die axiale Stabilisierung des Spannringes gewährleistet bleibt.

Zur Fixierung eines Dichtungsringes in einer Muffe wird der Spannring in aller Regel in einen radial einwärts offenen Haltering des Dichtungsringes eingesetzt, aufgeweitet und der Haltering dadurch in eine in der Innenwand der Muffe ausgebildete Ringnut eingepresst. Dabei lässt sich auch dann ein fester Sitz des Halteringes erzielen, wenn der Durchmesser der Muffe bzw. der Ringnut wesentlich grösser als ein vorgesehenes Sollmass oder Nennmass ist.

Durch die Selbstverriegelung des radial aufweitbaren Spannringes wird der Dichtungsring in der Muffe nicht nur gegen eine axiale Verschiebung beim Einschieben des Spitzendes in die mit dem Dichtungsring bestückte Muffe fixiert, sondern ist der Dichtungsring gleichzeitig gegen ein unbeabsichtigtes oder unbefugtes Entfernen aus der Muffe durch äussere Einflüsse gesichert.

Der Spannring ist vorzugsweise als ein im Axialschnitt kantiges oder rundes, nach radial innen offenes U-Profil ausgebildet, das an einem seiner beiden Enden in eine Zunge ausläuft, die in das ununterbrochen umlaufende Profil des gegenüberliegenden Spannringendes einlegbar ist. Bei dieser Ausbildung des Spannringes ist die Selbstverriegelung vorzugsweise durch ineinandergreifende komplementäre Sägezahnprofile verwirklicht, die auf der radial innenliegenden Sohle des U-Profils und auf der radial aussenliegenden Sohle der Zunge ausgebildet sind. Die zusammenwirkenden Sperrflächen dieser beiden Sägezahnprofile, die die Radiusverkleinerung des Spannringes verhindern, sind dabei vorzugsweise so hinterschnitten, dass bei gespanntem Ring ein Herausnehmen der Zunge aus dem U-Profil durch die tangential einander entgegengerichtet wirkenden Spannkräfte verhindert wird. Die Zunge wird durch die Hinterschneidung der Schrägflächen auf die Sohle des U-Profils gezwungen. Die Sperrflächen sind vorzugsweise um 8 bis 30°, insbesondere vorzugsweise um ca. 10 bis ca. 15°, gegen die durch die Oberkante des Sägezahnprofils verlaufende Tangentennormale des Spannringes in Richtung der Gleitflächen der Sägezahnprofile geneigt hinterschnitten.

In den beiden einander überlappenden Enden des Spannringes können Ausnehmungen, beispielsweise Löcher, Stege, Ansätze oder Aussparungen, ausgebildet sein, die das Ansetzen eines Spreizwerkzeuges, beispielsweise einer Spreizzange, mühelos ermöglichen. Durch das Hinterschneiden der Sperrflächen wird dabei das Spannen besonders vereinfacht, da beim Nachlassen der aufgebrachten Spannkraft die Zunge sofort durch die Schrägflächen sperrend auf die Sohle des U-Profils gezogen wird.

Die Zunge, die in das eine Ende des offenen, sich überlappenden Spannringes ausläuft, liegt vorzugsweise auf einem um die Dicke der Sohle des U-förmigen Spannringes auf der gegenüberliegenden Seite kleineren Radius als die radial aussenliegende Randfläche des Spannringes. Dadurch läuft der offene, sich an seinen beiden Enden überlappende Spannring nicht spiralig in sich zurück, sondern streng kreisförmig unter Freilassung einer nur relativ schmalen Fuge an der Stossstelle. Dies gewährleistet ein festes und gleichmässiges Eindrücken eines Halteringes eines Dichtungsringes in die Ringnut einer Muffe, und zwar auch im Bereich der Stossstelle des Spannringes.

Insbesondere bei Verwendung des Spannringes in Rohren mit grösseren Durchmessern ist es häufig wünschenswert, nicht die Profilabmessungen der Spannringe selbst zu vergrössern, was ihrer Funktion nach durchaus nicht erforderlich ist, sondern die Spannringe durch zusätzliche Massnahmen zu stabilisieren. Eine solche Stabilisierung kann auch bereits für kleinere Rohrdurchmesser durchaus wünschenswert sein. Eine zusätzliche Stabilisierung des Spannringes, insbesondere gegen ein axiales Abrollen und welliges Verformen, erfolgt durch Anformen einer in sich zwar steifen, aber formstabilelastischen Flachbandfahne an einem oder an beiden seitlichen Schenkeln des den Klemmring bildenden U-Profils, und zwar an deren Aussenseiten. Diese Flachbandfahnen stehen im wesentlichen axial und senkrecht zu den U-Profilseiten, bilden also zur Muffenwand konzentrische Zylinderringreifen, die fest am Klemmring angeformt sind. Die Flachbandfahnen sind zumeist so breit ausgebildet, dass sie ein Abrollen des U-Profilringes in axialer Richtung verhindern können. Vorzugsweise ist dabei das U-Profil des Spannringes im Querschnitt im wesentlichen etwa quadratisch, die Flachbandfahne nur auf der zum Muffengrund weisenden Seite des U-Profils angeformt und rd. doppelt so breit wie das U-Profil.

Der Spannring besteht vorzugsweise aus Kunststoff und ist in der Regel als Spritzgiessformteil hergestellt.

Die Selbstverriegelung der beiden einander überlappenden Spannringenden gegen Radiusverkleinerung des Spannringes ist vorzugsweise als ineinanderklinkendes sperrendes Sägezahnprofil in der vorstehend beschriebenen Weise ausgebildet. Prinzipiell kann jedoch auch jeder andere Verriegelungsmechanismus eingesetzt werden, beispielsweise ein Klemmkeilmechanismus, ein Sperrklinkenmechanismus oder ein Sperrzapfenmechanismus, im einfachsten Fall sogar ein als Äquivalent zur automatischen Selbstverriegelung betrachteter Mechanismus, bei dem die Sperrzapfen, Verriegelungszungen oder Klemmechanismen erst nach Erreichen der Endposition der Ringspreizung von Hand durch Eingriff mit einem entsprechenden Werkzeug oder Werkstück gesetzt werden.

Die Erfindung ist im folgenden an Hand eines Ausführungsbeispiels in Verbindung mit der Zeichnung näher erläutert. Es zeigen:

Fig. 1 in Draufsicht von radial innen den Verschlussbereich des Spannringes;

Fig. 2 den in Fig. 1 gezeigten Spannring im Radialschnitt;

Fig. 3 einen Schnitt nach III-III in Fig. 1, und

Fig. 4 einen Schnitt nach IV-IV in Fig. 1.

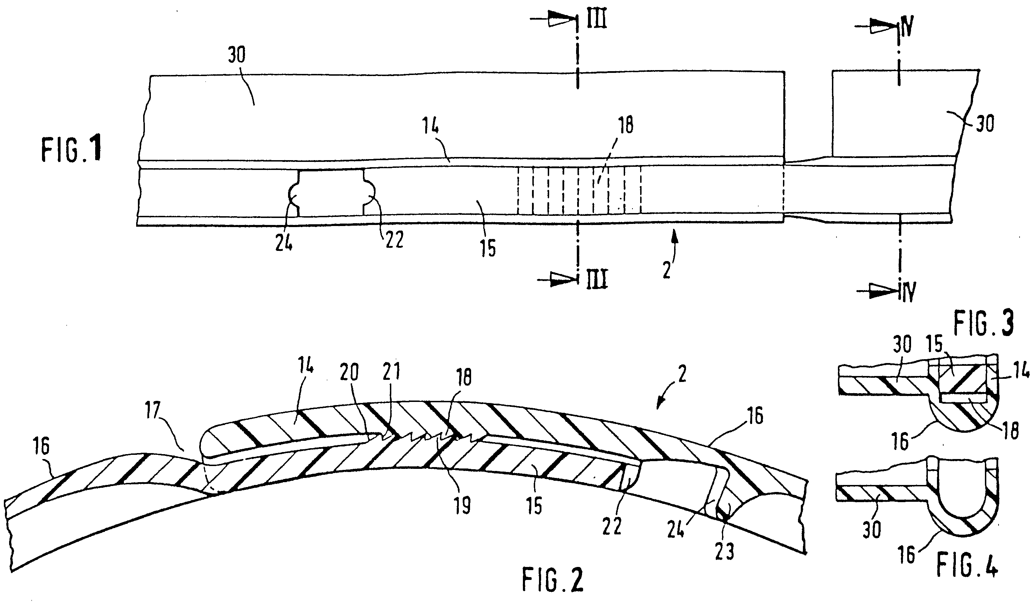

In den Fig. 1 bis 4 ist ein Ausführungsbeispiel eines Spannringes 2 dargestellt, der zur Verankerung eines elastischen Dichtungsringes in der Muffe einer Rohrsteckverbindung dient.

Der Spannring ist einstückig aus Kunststoff durch Spritzgiessen hergestellt. Er weist ein radial aussen rundes Profil auf.

Der Spannring 2 ist als offener Ring mit U-Profil und mit sich überlappenden Enden 14, 15 ausgebildet (Fig. 1, 2 und 3). An einem dieser beiden sich überlappenden Enden des Spannringes ist das U-Profil bis zum vorderen Rand geführt. Dieses Ende des Spannringes ist im folgenden als U-Profilende 14 bezeichnet (Fig. 1 und 2). Das gegenüberliegende Ende des Spannringes 2 ist als Zunge 15 ausgebildet, die in das U-Profilende 14 unter Überlappung der beiden Ringenden 14, 15 einlegbar ist. Das U-Profil des Spannringes ist nach radial innen offen.

Der Aussenradius der Zunge 15 ist kleiner als der Radius der Aussenfläche 16 des Spannringes 2. Dadurch wird verhindert, dass der Spannring insgesamt beim Überlappen der beiden Spannringenden 14, 15 spiralig verläuft. Vielmehr zeigt die Aussenfläche 16 des Spannringes genau kreisförmigen Verlauf, der nur am Stoss der beiden Enden durch einen kleinen Spalt 17 unterbrochen ist (Fig. 2).

Auf seiner radial innenliegenden Sohle trägt das U-Profilende 14 in axialer Richtung eingeschnitten ein Sägezahnprofil 18. Ein komplementäres Sägezahnprofil 19 ist auf der radial aussenliegenden Oberfläche der Zunge 15 ausgebildet. Die Sägezahnprofile 18, 19 greifen so ineinander und wirken so zusammen, dass die beiden sich überlappenden Enden des Spannringes unter Radiuserweiterung des Spannringes tangential gegeneinander verschiebbar sind, wobei aber eine tangentiale Verschiebung der beiden sich überlappenden Enden gegeneinander im Sinne einer Radiusverkleinerung blockiert ist. Die Gleitflächen 20 der Sägezahnprofile sind um ca. 60° gegen die Tangentennormale durch die obere Profilkante geneigt. Die Sperrflächen 21 der Sägezahnprofile 18, 19 sind hinterschnitten, und zwar in der Weise, dass sie in der gleichen Richtung wie die Gleitflächen 20 um ca. 10° gegen die Tangentennormale durch die Profiloberkante geneigt sind. Diese Hinterschneidung kann bis zu etwa 30° betragen und sollte mindestens ungefähr 5 bis 8° betragen. Die Hinterschneidung der Sperrflächen verhindert, dass bei tangential gespanntem und radial aufgeweitetem Spannring 2 die Zunge 15 radial aus dem U-Profilende 14 herausgehoben oder herausgebrochen werden kann. Dies bedeutet nicht nur eine wesentliche Spannstabilisierung und Stabilisierung des gespannten Dichtungsringes selbst, sondern auch eine zusätzliche Diebstahlsicherung für Dichtungsringe, die mit einem solchen Spannring in Rohrmuffen vormontiert sind.

Um ein bequemes und leichtes Spannen des mit seiner Aussenseite 16 bestimmungsgemäss das Halteorgan eines Dichtungsringes gegen die Innenwand einer Rohrmuffe zwingenden Spannringes 2 zu ermöglichen, weist die Stirnseite der Zunge 15 eine radialstehende halbzylindrische Ausnehmung 22 auf. Dieser Ausnehmung in einigem Abstand gegenüber ist im U-Profilende 14 axialstehend eine Rippe 23 ausgebildet, die ebenfalls eine radialstehende halbzylindrische Ausnehmung 24 aufweist.

Diese Ausnehmungen 22 und 24 stehen einander so gegenüber, dass sie den Ansatz eines Spannwerkzeugs, beispielsweise den Einsatz der Angriffszapfen einer einfachen Spannzange oder Spreizzange, ermöglichen.

Den Fig. 1, 3 und 4 ist eine Ausgestaltung des Spannringes zu entnehmen, die einer erfindungswesentlichen Weiterbildung des Grundgedankens der Erfindung entspricht. Auf seiner axial innenliegenden Seite trägt das U-Profil des Spannringes axial und im wesentlichen senkrecht zum Schenkel des U-Profils vorspringend aussen eine Fahne 30, die einstückig mit dem U-Profil, genauer gesagt mit dem Schenkel des U-Profils, steif und formstabil-elastisch ausgebildet ist. Diese Fahne läuft als Flachband periphär um den gesamten Spannring um und verhindert sein axiales Abrollen, beispielsweise beim Einschieben des Spitzendes in eine Muffe, in der ein Dichtungsring mit einem solchen Spannband vormontiert ist. Durch diese Flachbandfahne wird aber auch der Ring selbst gegen ein Ausknicken aus der Radialebene stabilisiert. Solcherart stabilisierte Spannringe können bei vergleichsweise verschwindend kleinen Abmessungen Kanalisationsrohrdichtungen im Meterbereich so verankern, dass sie auch bei Einschubkräften im kN-Bereich nicht aus ihrer Verankerung gelöst werden.

In dem in den Fig. 1, 3 und 4 gezeigten Ausführungsbeispiel ist die Flachbandfahne 30 nur auf einer der beiden Seiten des U-Profils angebracht. Sie kann selbstverständlich auch auf beiden Seiten angeordnet sein.

In der aus den Fig. 3 und 4 erkennbaren Weise ist die Fahne 30 im Bereich der Radial innenliegenden Hälfte der Schenkelhöhe des U-Profils angeordnet. Durch diese Art des Ansetzens der Fahne 30 wird zumindest im wesentlichen verhindert, dass die Fahne 30 beim Spannen des Spannringes 2 wesentlichen radialen Kräften ausgesetzt ist. Bei bestimmungsgemässer Verwendung wird sich die Flachbandfahne 30 in aller Regel an oder auf einem Zwischenringsteg des Dichtungsringes abstützen, der ein Halteorgan eines solchen Dichtungsringes, beispielsweise einen als Haltering dienenden Nutring, mit dem eigentlichen Dichtungsring, meist einem Lippenring, verbindet.

In der Praxis können der gummielastische Dichtungsring und der Spannring 2 vom Hersteller als Einzelteile gefertigt und geliefert werden und vom Anwender, in der Regel vom Rohrhersteller, in der Weise in der Muffe vormontiert werden, dass zunächst der Gummidichtungsring in die Muffe eingeschoben wird, bis beispielsweise ein am Dichtungsring angeformter Haltering in einer zugeordneten Ringnut liegt, die in der Innenwand der Muffe ausgebildet ist. Anschliessend wird dann der Spannring 2 in ein am Haltering vorbereitetes Profil, beispielsweise in eine der Aussenfläche 16 des Spannringes profilkomplementär ausgebildete Ringnut des Halteringes, eingesetzt und gespreizt. Zu diesem Zweck kann beispielsweise eine Spannzange dienen, die beim Zusammendrücken der Griffe den Abstand zwischen zwei Angriffszapfen vergrössert. Dadurch wird der Spannring radial geweitet und der Haltering des Dichtungsringes, in dem der Spannring liegt, in der Muffe verankert. Der am Haltering angeformte Dichtungsring ist dann sowohl gegen unbefugtes oder unbeabsichtigtes Entfernen aus der Muffe als auch gegen axiales Verschieben beim Einschieben des Spitzendes gesichert.

Alternativ können an dem Haltering eines Dichtungsringes aber beispielsweise auch Klemmwulstringe vorgesehen sein, die einen bereits vor der Montage des Dichtungsringes in der Muffe eingelegten Spannring 2 relativ fest einspannen. Bei dieser Ausbildung können der Dichtungsring und der Spannring als einheitliche Dichtungsringbaugruppe vom Hersteller an den Anwender geliefert werden. Der Anwender setzt dann den Dichtungsring mit dem eingelegten und eingespannten Spannring als Einheit in einem einzigen Arbeitsgang in die Muffe ein, ohne dass er den Spannring separat zur Verfügung zu stellen und einzulegen braucht.

Sowohl bei Lieferung des Dichtungsringes und des Spannringes in Form zweier separater Einzelteile als auch bei vormontierter einteiliger Lieferung des Dichtungsringes und des Spannringes als Baugruppe ist der Spannring vorzugsweise so gefertigt, dass er unter geringer radiusverkleinernder Eigenvorspannung steht. Die beiden sich überlappenden Enden 14, 15 des Spannringes 2 sind dabei weiterhin vorzugsweise so überlappt, dass der dem Anwender gelieferte und zur Verfügung stehende Spannring auf den kleinsten erforderlichen Durchmesser eingestellt ist. Der Spannring kann auf diese Weise leicht in die Muffe eingesetzt werden und braucht zur bestimmungsgemässen Verwendung nur noch unter dem Angriff des Spreizwerkzeuges an den Ausnehmungen 22, 24 mit einem einzigen Arbeitsgriff radial aufgeweitet zu werden.

Der Spannring ist in Verbindung mit den verschiedensten Dichtungsringen verwendbar. So kann er beispielsweise für Dichtungsringe mit einer, mit zwei, mit drei oder mit vier Dichtlippen eingesetzt werden. Er kann aber auch für Dichtungsringe verwendet werden, die nicht nach dem Prinzip der Lippendichtung, sondern nach dem Prinzip der Materialverpressung dichten. Die dabei verwendeten Zwischenstege zwischen dem Haltering und dem eigentlichen Dichtungsring können je nach Ausbildung des Ringes und nach den Erfordernissen des Rohrherstellers axial länger oder kürzer ausgebildet sein, können aber auch ganz entfallen, wenn am Dichtungsring selbst ein Profil zum Einsetzen und zum Angriff des Spannringes 2 ausgebildet werden kann.

Bei bestimmungsgemässer Verwendung sind der Spannring 2 und der durch diesen zu verankernde Dichtungsring vorzugsweise einander so zugeordnet, dass der Spannring beim Einschieben des Spitzendes den Dichtungsring ziehend am Muffenrand hält. Ein radiales Abrollen des Spannringes und ein dadurch bedingtes Herausspringen des Spannringes aus seinem Halteringprofil wird dabei wirksam durch die angeformte, als Flachband ausgebildete Fahne 30 verhindert, die vorzugsweise auf der in die Einschubrichtung weisenden Aussenseite des Schenkels des U-Profils angeformt ist. Diese Flachbandfahne stützt sich dabei auf funktionsentsprechend ausgebildete Ringteile des Dichtungsringes.

## Patentansprüche

1. Spannring zur Befestigung eines elastischen Dichtungsringes in einer Rohrmuffe, wobei der Spannring (2) offen ist, sich an seinen beiden offenen Enden (14, 15) überlappt, und zwar in der Weise, dass der Spannring an seinem einen Ende in eine Zunge (15) ausläuft, die an seinem anderen Ende so in ein offenes U-Profil (14) einlegbar ist, dass der Spannring gegen eine Radiusverkleinerung verriegelbar ist, dadurch gekennzeichnet,

a) dass der Spannring (2) unter Selbstverriegelung (18, 19) gegenüber einer Radiusverkleinerung radial aufweitbar ist, wenn die Zunge (15) im U-Profil (14) liegt,

b) dass das U-Profil (14) nach radial innen offen ist, und

c) dass eine steife, formstabil-elastische Flachbandfahne (30) zumindest an einem der beiden Schenkel des U-Profils des Spannringes (2) axial stehend und peripher umlaufend fest angeformt und zumindest so breit ausgebildet ist, dass sie ein Abrollen des U-Profilringes in axialer Richtung verhindern kann.

2. Spannring nach dem Anspruch 1, dadurch gekennzeichnet, dass die Zunge (15) des Spannringes (2) auf einem um die Stärke der Sohle des U-Profilendes (14) kleineren Radius liegt als die Spannringaussenfläche (16), an der sie angeformt ist, so dass die Aussenfläche (16) des Spannringes (2) nicht spiralig, sondern streng kreisförmig verläuft und durch einen nur kleinen Spalt (17) am Stoss unterbrochen ist.

3. Spannring nach einem der beiden Ansprüche 1 oder 2, dadurch gekennzeichnet, dass die Selbstverriegelung des Spannringes (2) durch ineinandergreifende komplementäre Sägezahnprofile (18, 19) auf der radial innenliegenden Sohle des U-Profilendes (14) und auf der radial aussenliegenden Seite der Zunge (15) bewirkt wird, deren Sperrflächen (21) um 8 bis 30°, vorzugsweise ca. 10 bis ca. 15°, gegen die durch die Oberkante des Sägezahnprofils laufende Tangentennormale des Spannringes in Richtung der Gleitflächen (20) der Sägezahnprofile geneigt hinterschnitten sind.

4. Spannring nach einem der Ansprüche 1 bis 3, dadurch gekennzeichnet, dass im vorderen stirnseitigen Rand der Zunge (15) eine radial stehende Ausnehmung (22) ausgebildet ist und bei engster Stellung des Spannringes (2) der Stirnseite der Zunge (15) im U-Profilende (14) eine axial ausgerichtete Querrippe (23) gegenüberliegt, in der eine komplementäre radial stehende Ausnehmung (24) ausgebildet ist, wobei die beiden Ausnehmungen (22, 24) den Ansatz eines Spreizwerkzeuges ermöglichen.

## Revendications

1. Bague de serrage pour la fixation d'une bague d'étanchéité élastique dans un manchon tubulaire, cette bague de serrage (2) se superposant à elle-même au niveau de ses deux extrémités ouvertes (14, 15) de telle manière que la bague de serrage se termine à l'une de ses extrémités par une languette (15), dont l'extrémité libre peut s'engager dans un profil en U ouvert (14), et qu'elle puisse être verrouillée de manière à ne pas pouvoir diminuer de rayon, caractérisée en ce que la bague de serrage (2), tout en étant automatiquement verrouillée de manière à ne pas pouvoir diminuer de rayon, peut s'élargir dans le sens radial alors que la languette (15) est engagée dans le profil en U (14), en ce que le profil en U (14) est ouvert vers l'intérieur dans le sens radial et en ce qu'une bande (30), rigide mais élastique tout en étant de forme stable, ajoutée par formage sur l'une au moins des ailes du profil en U de la bague de serrage (2), orientée dans le sens axial et suivant toute la périphérie, est au moins assez large pour pouvoir empêcher l'anneau constitué par le profil en U de tourner dans le sens axial.

2. Bague de serrage selon la revendication 1, caractérisée en ce que la languette (15) de la bague de serrage (2) suit un contour dont le rayon est inférieur, d'une quantité égale à l'épaisseur du fond du profil en U (14), à celui de la surface extérieure (16) de la bague de serrage, afin que la surface extérieure (16) de la bague (2) ne présente pas une forme en spirale, mais soit rigoureusement circulaire et ne soit interrompue que par une petite fente (17) dans la zone de jonction de la bague.

3. Bague de serrage selon l'une quelconque des revendications 1 ou 2, caractérisée en ce que l'autoverrouillage de la bague de serrage (2) est assuré par la copénétration de reliefs en dents de scie (18, 19) complémentaires, qui sont ménagés sur le fond du profil en U (14) tourné vers l'intérieur dans le sens radial et sur la face extérieure, dans le sens radial, de la languette (15) et dont les surfaces d'arrêt (21) sont inclinées suivant un angle de 8 à 30°, de préférence de 10 à 15° environ, par rapport à la normale à la ligne tangente au bord supérieur des reliefs en dents de scie et vont dans le même sens que les surfaces de glissement (20) des reliefs en dents de scie.

4. Bague de serrage selon l'une quelconque des revendications 1 à 3, caractérisée en ce que le bord frontal avant de la languette (15) comporte un évidement (22) qui est orienté dans le sens radial et, lorsque la bague de serrage (2) est, dans le profil en U (14), au plus près du bord frontal de la languette (15), se trouve en face d'une nervure transversale (23) qui est orientée dans le sens axial et dans laquelle un évidement complémentaire (24) est orienté dans le sens radial, les deux évidements (22, 24) permettant l'application d'un outil d'écartement.

## Claims

1. Tensioning ring for the fixation of an elastic sealing ring in the bell of a pipe, said tensioning ring (2) being open and overlapping with its both open ends (14, 15) in such a manner that the tensioning ring forms a tongue (15) on one of its ends, which tongue can be inserted in an open U-profile (14) formed on its other end, whereby the tensioning ring can be locked with regard to a reduction of its radius, characterized in that:

a) the tensioning ring (2) can be radially extended while simultaneously self-latching (18, 19) with regard to a reduction in radius when the tongue (15) is held in said U-profile (14),

b) said U-profile (14) is open in the radially inward direction, and

c) a stiff and shape-retainingly elastic flat hoop ribbon (30) is integrally fixed to at least one of the two side walls of the U-profile of the tensioning ring in such a manner that it extends axially all around the periphery of the tensioning ring and at least is made so broad to prevent a rolling-off of said U-profiled ring in an axial direction.

2. A tensioning ring according to claim 1, characterized in that the tongue (15) of the tensioning ring (2) has a radius smaller than the radius of the outer surface (16) of the tensioning ring to which it is integrated by an amount corresponding to the thickness of the bottom wall of the U-profile, so that the outer surface (16) of the tensioning ring (2) has not the form of a spiral, but instead is strictly circular, interrupted by just a small gap (17) at the junction.

3. Tensioning ring according to one of the claims 1 or 2, characterized in that the self-latching of the tensioning ring (2) is brought about by interacting complementary saw-tooth profiles (18, 19) on the radially inner bottom surface of the U-profile end (14) and on the radially outer side of the tongue (15), respectively, the latching surfaces (21) of said saw-tooth profile being undercut with an inclination of 8 to 30°, preferably from about 10 to about 15°, with respect to the normal of the tangent of the tensioning ring in the upper edge of the saw-tooth profile, said inclination having the same direction of inclination as have the glide surfaces (20).

4. Tensioning ring according to one of the claims 1 to 3, characterized in that a radially extending recess (22) is provided in the leading side edge of the tongue (15), and in that in the most narrow configuration of the tensioning ring (2) an axially extending traverse (23) is opposed to the leading side edge of the tongue (15) inside the U-profile (14), in which traverse there is provided a radially extending recess (24) complementary to the recess (22) in such a manner that the combined recesses (22, 24) allow for applying a spreading tool.

FIG.1

FIG.2

FIG.3

FIG.4